**Europäisches Patentamt**

**European Patent Office**

**Office européen des brevets**

(19)

(11) Veröffentlichungsnummer : **0 060 804**
**B1**

(12) # EUROPÄISCHE PATENTSCHRIFT

(45) Veröffentlichungstag der Patentschrift :
**03.12.86**

(51) Int. Cl.⁴ : **B 60 C 27/10**, B 60 C 27/06

(21) Anmeldenummer : **82730032.8**

(22) Anmeldetag : **12.03.82**

(54) **Gleitschutzkette.**

(30) Priorität : **17.03.81 DEU 8108431**
**17.03.81 DE 3111271**

(43) Veröffentlichungstag der Anmeldung :
**22.09.82 Patentblatt 82/38**

(45) Bekanntmachung des Hinweises auf die Patenterteilung : **03.12.86 Patentblatt 86/49**

(84) Benannte Vertragsstaaten :
**DE FR GB NL SE**

(56) Entgegenhaltungen :
**US-A- 2 547 007**
**US-A- 2 622 651**
**US-A- 2 976 902**
**US-A- 3 893 499**

(73) Patentinhaber : **RUD-Kettenfabrik Rieger & Dietz GmbH u. Co.**
**Friedensinsel**
**D-7080 Aalen 1 (DE)**

(72) Erfinder : **Rieger, Hansjörg, Dr.-Ing.**
**Saarstrasse 48**
**D-7070 Aalen (DE)**
Erfinder : **Holzwarth, Dietmar**
**Vogelhofstrasse 51**
**D-7070 Schwäbisch Gmünd (DE)**

(74) Vertreter : **Böning, Manfred, Dr. Ing. et al**
**Patentanwälte Dipl.-Ing. Dieter Jander Dr. Ing. Manfred Böning Kurfürstendamm 66**
**D-1000 Berlin 15 (DE)**

Jouve, 18, rue St-Denis, 75001 Paris, France

**Beschreibung**

Die Erfindung betrifft eine Gleitschutzkette für Fahrzeugreifen mit je einer bei montierter Kette gegen die Innenseite und die Aussenseite des Reifens zur Anlage kommenden Halterung für sich über die Lauffläche erstreckende Kettenstrangabschnitte, bei der zum Spannen der über den Reifen stülpbaren, von einem federnden Stahlbügel gebildeten, eine gewisse Eigensteifigkeit aufweisenden inneren Halterung ein im Bereich der inneren Halterung einen Flaschenzug bildender Spannstrang dient, der im Zwischenraum zwischen den Endteilen der inneren Halterung angeordnet ist und dessen freies Ende über die Lauffläche des Reifens zur äusseren Halterung geführt ist.

Gleitschutzketten der vorgenannten aus der DE-A-2 556 115 bekannten Art bieten gegenüber Gleitschutzketten mit von Seitenketten gebildeten, im demontierten Zustand in sich zusammenfallenden inneren und äusseren Halterungen den Vorteil, dass sie leichter montierbar sind und sich ein unter Umständen kompliziertes Entwirren des Kettennetzes vor der Montage praktisch erübrigt.

Bekannt ist eine einschlägige Gleitschutzkette, bei der die Umlenkung des Spannstranges zur Lauffläche des Reifens durch eine mit dem Ende eines die innere Halterung bildenden elastischen Bügels fest verbundene Öse erfolgt (DE-OS 25 56 115). Wie die Praxis gelehrt hat, ist bei einer solchen Kette nicht die Gewähr dafür gegeben, dass die Bügelenden beim Spannen der Ketten einen hinreichend grossen Abstand von der Lauffläche des Reifens beibehalten. Es besteht vielmehr die Gefahr, dass das die Umlenköse aufweisende Bügelende beim Spannen der Kette von der Radachse weg nach aussen, d. h. in den Laufflächenbereich gezogen wird, wo es nicht nur selbst beschädigt werden sondern auch Schäden am Fahrzeug verursachen kann.

Die angedeutete Gefahr, die der Einführung von bekannten Gleitschutzketten der in Betracht gezogenen Art bisher entgegenstand, lässt sich auch nicht dadurch eliminieren, dass man nach einem älteren Vorschlag statt einer fest mit dem Ende der inneren Halterung verbundenen Umlenköse eine in einer am Ende einer bügelförmigen Halterung angeordnete Öse eingehängte Umlenkhülse verwendet. Zwar wird durch den Ersatz einer Umlenköse durch eine Umlenkhülse das Anziehen der Spannkette erleichtert und insbesondere beim Montieren die Gefahr des Verhakens von Kettenstrangabschnitten an der Reifenrückseite gemindert. Der Einsatz der genannten älteren Gleitschutzkette vermag indessen ebenfalls nicht voll zu befriedigen.

Aus der DE-U 76 23 342 ist ausserdem eine Gleitschutzkette bekannt, deren innere Halterung von einem elastisch biegbaren, aus einem Drahtseil hergestellten Ring gebildet wird, der durch eine Einrichtung zur Veränderung seiner Umfangslänge geschlossen ist. Die äussere Halterung dieser Kette ist offen, lässt sich aber durch eine Schliesskette schliessen, die an einem Ende der äusseren Halterung angreift und durch einen Umlenkring ziehbar ist, der über ein Kettenstück mit dem anderen Ende der äusseren Halterung verbunden ist. Am Ende der Schliesskette befindet sich ein Haken, der bei gespannter Schliesskette in ein Teil der äusseren Halterung eingehängt werden kann. Bei der Montage der bekannten Ketten muss ihr Benutzer sie mit der inneren, d. h. geschlossenen Halterung zuoberst vor oder hinter dem Fahrzeugrad auf den Boden legen und anschliessend das Fahrzeugrad durch Verfahren des Fahrzeuges in die von den Halterungen gebildeten Ringe überführen. Danach wird die geschlossene innere Halterung zu einer Ellipse verformt und über das Rad gestülpt. Schliesslich wird die äussere Halterung an der Aussenseite des Rades durch die Schliesskette geschlossen. Diese Art der Montage vermag unter anderem deshalb nicht zu befriedigen, weil das Hineinfahren des Fahrzeugrades in die von der Halterung gebildeten Ringe einerseits Geschick voraussetzt und andererseits in Fällen, in denen sich das Fahrzeugrad beim Anfahren in ein Schneeloch eingräbt, praktisch unmöglich ist.

Der Erfindung liegt die Aufgabe zugrunde, eine Gleitschutzkette der in Betracht gezogenen Art zu schaffen, bei der sichergestellt ist, dass die Enden der von einem Stahlbügel gebildeten Halterung sowohl während der Montage, d. h. beim Anziehen des Spannstranges, als auch beim anschliessenden Betrieb des Fahrzeuges nicht nach aussen in den Laufflächenbereich wandern sondern im ungefährdeten Bereich der hinteren Reifenflanken verbleiben.

Diese Aufgabe wird durch die kennzeichnenden Merkmale des Anspruchs 1 gelöst.

Die erfindungsgemässe Gleitschutzkette bietet den Vorteil, dass sie erstmals einen zuverlässigen Einsatz einer Gleitschutzkette ermöglicht, die mit einem integrierten elastischen Montagebügel versehen ist, dessen Bügelöffnung durch einen von der Vorderseite eines Rades betätigbaren Spannstrang geschlossen und geschlossengehalten werden kann. Der Bügel behält auf Grund von der Umlenkung gegenüber den Endteilen eingehaltenen Abstandes und der hieraus resultierenden verbesserten Kraftverhältnisse im wesentlichen seine Form bei, d. h. er verläuft im gespannten Zustand auf seiner gesamten Länge weitgehend konzentrisch zur Radachse. Aufgrund der Ausbildung der zweiten Verbindungselemente durch die Stränge des Flaschenzuges wird die auf die innere Halterung wirkende radial nach aussen gerichtete Kraft des Spannstranges reduziert, wodurch die Kraftverhältnisse zusätzlich verbessert werden.

Weitere Einzelheiten und Merkmale der Erfindung ergeben sich aus den Unteransprüchen und der nachfolgenden Beschreibung von in der mehr oder weniger stark schematisierten Zeichnung dargestellten Ausführungsbeispielen. Es zeigen :

Figur 1 die perspektivische Ansicht einer ersten Gleitschutzkette ;

Figur 2 eine Draufsicht auf die Abwicklung der Spannstelle einer Gleitschutzkette, die weitgehend der Gleitschutzkette gemäss Fig. 1 entspricht ;

Figur 3 eine Draufsicht auf die Abwicklung der Spannstelle einer modifizierten Gleitschutzkette ;

Figur 4 eine Einzelheit einer Spannstelle mit abgewandelten Endteilen ;

Figur 5 einen Schnitt längs der Linie V-V in Fig. 4 ;

Figur 6 einen Schnitt längs der Linie VI-VI in Fig. 4 ;

Figur 7 eine weitere Spannstelle ;

Figur 8 in verkleinertem Massstab die Spannstelle gemäss Fig. 4 im ungespannten Zustand ;

Figur 9 die Spannstelle gemäss Fig. 8 im gespannten Zustand ;

Figur 10 eine modifizierte Spannstelle ;

Figur 11 die Spannstelle eines Stahlbügels mit zum Bügelzentrum gekrümmten Enden ;

Figur 12 eine Spannstelle mit einer dreimaligen Umlenkung des Spannstranges.

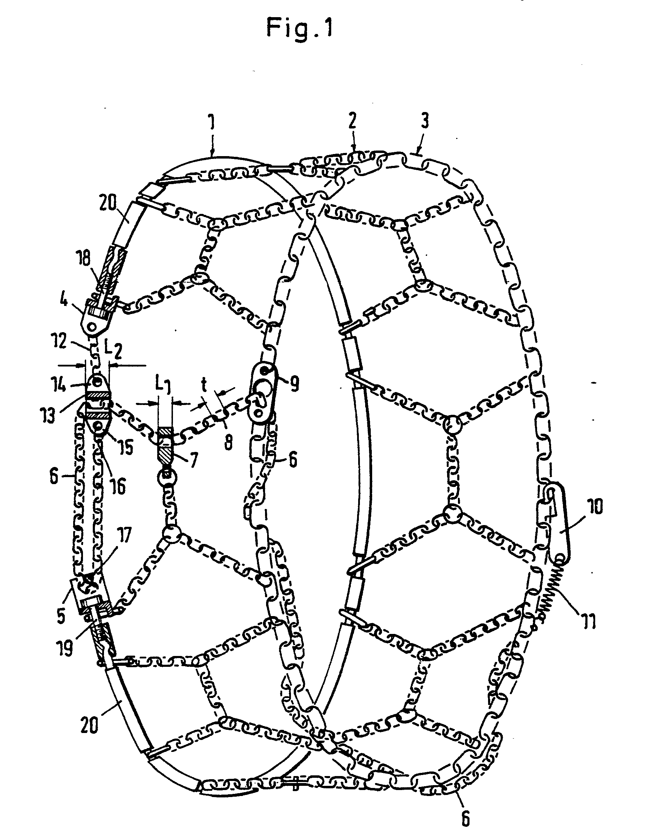

Bei der in Fig. 1 dargestellten Gleitschutzkette ist 1 die innere Halterung für das Kettennetz 2 einer Gleitschutzkette, deren äussere Halterung 3 von einer durchgehenden geschlossenen Seitenkette gebildet wird. Die innere Halterung 1 besteht aus einem federnden Stahlbügel, der mit Endteilen 4 und 5 versehen ist, die einen Abstand voneinander haben, der in der Grössenordnung von 10-25 % der Länge des Stahlbügels liegt. Die Endteile 4 und 5 der inneren Halterung 1 werden von einem aus einer Kette bestehenden Spannstrang 6 überbrückt, der quer über die Lauffläche von der inneren Halterung 1 zur äusseren Halterung 3 geführt ist, wobei er im Bereich der Lauffläche eine Gleithülse 7 passiert. Die Länge $L_1$ dieser Gleithülse ist grösser als die Differenz aus der Teilung t der Glieder 8 des Spannstranges und dem Glieddrahtdurchmesser d dieser Glieder. 9 ist ein Sperrelement mit einer im wesentlichen schlüssellochförmigen Durchziehöffnung, durch das die Lage des Spannstranges 6 an der äusseren Halterung 3 arretierbar ist. Das überschüssige Ende des Spannstranges 6 wird, wie in Fig. 1 dargestellt, um die äussere Halterung herumgeschlungen und schliesslich wird das freie Ende des Spannstranges mit Hilfe eines Verwahrungshakens 10 an einer geeigneten Stelle der äusseren Halterung verankert. Zwischen dem Verwahrungshaken 10 und dem übrigen Teil des Spannstranges ist ein elastisches Zwischenstück 11 angeordnet, das einem unerwünschten Lockern des verwahrten Spannstrangendes entgegenwirkt.

Die Endteile 4 und 5 sind um 360° drehbar an der inneren Halterung 1 gelagert. Aufgrund ihrer vollen Drehbarkeit ist ein Wenden des Kettennetzes möglich. Mit dem Endteil 4 ist über mindestens ein gegenüber der inneren Halterung 1 bewegliches Verbindungselement 12 eine von einer Gleithülse gebildete Umlenkung 13 verbunden. Auch in diesem Fall ist die Länge $L_2$ grösser als die Differenz aus der Teilung t der Glieder 8 des Spannstranges 6 und dem Glieddrahtdurchmesser d dieser Glieder. Die Umlenkung 13 ist zu diesem Zweck mit einer Anschlussöse 14 versehen, in die ein von einem Kettenstrang gebildetes Verbindungselement 12 eingehängt ist. Die Umlenkung 13 besitzt ausserdem eine Anschlussöse 15, in die das dem freien Ende des Spannstranges 6 abgewandte Spannstrangende 16 eingehängt ist. Der Spannstrang 6 verläuft von der Anschlussöse 15 der Umlenkung 13 zum Endteil 5. Er wird dort durch eine zweite Umlenkung 17, die von einer Rolle oder einem Zapfen gebildet wird, umgelenkt und zur Umlenkung 13 zurückgeführt, von der er über das Laufnetz zur äusseren Halterung 3 verläuft. Die Umlenkung 13 wird mit anderen Worten einerseits durch das Verbindungselement 12 und andererseits durch Teile des Spannstranges 6 im Abstand von den Endteilen 4 und 5 der inneren Halterung 1 gehalten. Die Einhaltung eines derartigen Abstandes ist für das einwandfreie Funktionieren der erfindungsgemässen Gleitschutzkette wichtig. Der Grund hierfür besteht darin, dass die « Abstandshalter » gegenüber der von einem elastischen Stahlbügel gebildeten inneren Halterung 1 ihre Lage verändern können und beim Betätigen des Spannstranges 6 in eine Position geführt werden, aus der von der Umlenkung 13 auf die Endteile 4 und 5 geringere Radialkräfte ausgeübt werden als bei unmittelbarem Anschluss der Umlenkung 13 an ein Ende der inneren Halterung.

Während das Endteil 4 von einem drehbaren Steg gebildet wird, besteht das Endteil 5 aus einem drehbaren Gehäuse für eine die Umlenkung 17 bildende Rolle. Die Endteile 4 und 5 sind auf Zapfen 18 und 19 gelagert, die gleichzeitig Anschlusselemente für sich über die Lauffläche erstreckende Kettenstrangabschnitte des Kettennetzes 2 bilden.

Um die Anschlusspunkte der Kettenstrangabschnitte des Kettennetzes 2 an die innere Halterung zu definieren, sind auf der inneren Halterung aus Kunststoff bestehende Abstandshalter 20 angeordnet. Diese Abstandshalter können von schlauchförmigen Kunststoffabschnitten gebildet sein, es ist jedoch auch möglich, sie unmittelbar auf den die innere Halterung bildenden Stahlbügel aufzuspritzen.

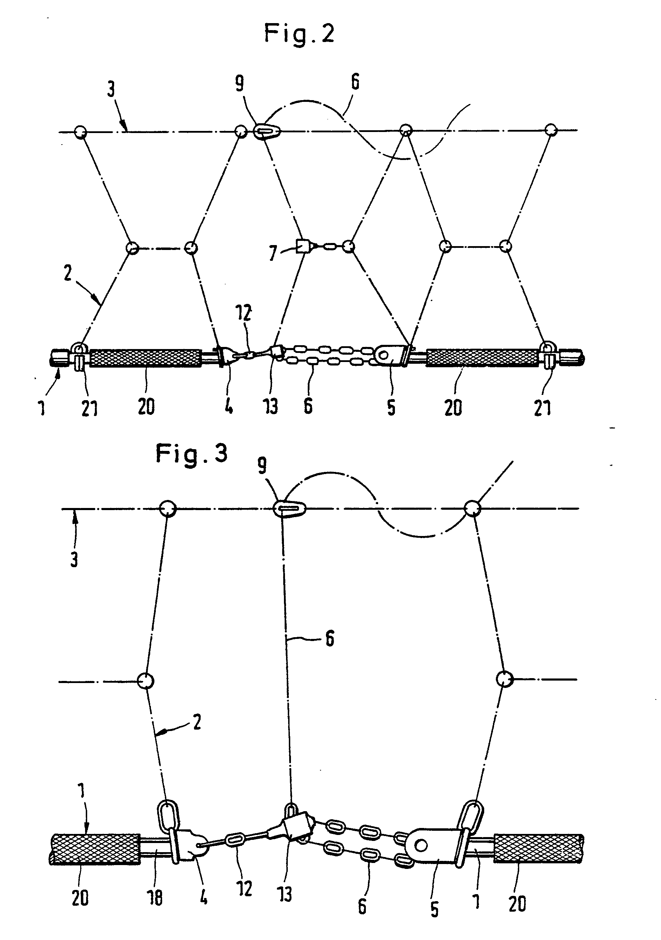

Fig. 2 zeigt die Draufsicht auf die Spannstelle einer der Gleitschutzkette gemäss Fig. 1 sehr ähnlichen entsprechenden Gleitschutzkette. Für Teile, die den Teilen der Gleitschutzkette gemäss Fig. 1 entsprechen, wurden die gleichen Bezugszeichen verwendet. Während bei dem zuerst beschriebenen Ausführungsbeispiel die Verbindung des Laufnetzes mit der inneren Halterung über Kettenglieder erfolgte, sind bei dem Ausführungsbeispiel gemäss Fig. 2 Hakenglieder 21 zum Anschluss des Kettennetzes 2 an die innere Halterung 1 verwendet worden.

Fig. 3 zeigt eine Spannstelle, bei der der Spannstrang 6 sich nicht organisch in die Laufnetzkonfiguration einfügt und im Bereich der Lauffläche keine Gleithülse passiert.

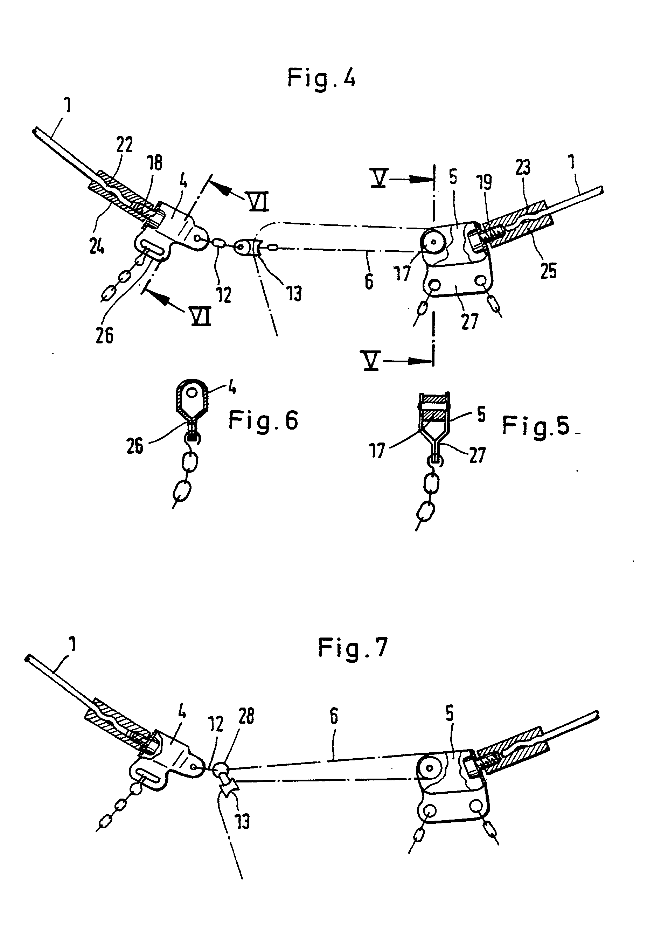

In Fig. 4 ist angedeutet, wie Endteile 4 und 5 abgewandelter Bauart drehbar am übrigen Teil der inneren Halterung gelagert sind. Der die innere Halterung 1 bildende Stahlbügel ist an seinen Enden 22 und 23 wellenförmig deformiert und auf ihm ist jeweils eine Hülse 24 bzw. 25 gepresst, die jeweils einen Zapfen 18 bzw. 19 für die Endteile 4 und 5 trägt. 26 und 27 sind Ansätze, die Anschlussösen für Kettenstränge des Kettennetzes bilden.

Während das dem freien Ende des Spannstranges 6 abgewandte Ende bei den zuvor beschriebenen Ausführungsbeispielen unmittelbar an die Umlenkung 13 angeschlossen ist, zeigt Fig. 7 ein Ausführungsbeispiel, bei dem das Ende des Spannstranges 6 in ein Kettenglied 28 eingehängt ist, das auch zur Verbindung des Endteiles 4 der inneren Halterung 1 mit der von einer Gleithülse gebildeten Umlenkung 13 dient, und zwar unter Einschaltung eines weiteren von einem Kettenglied gebildeten Verbindungselementes 12.

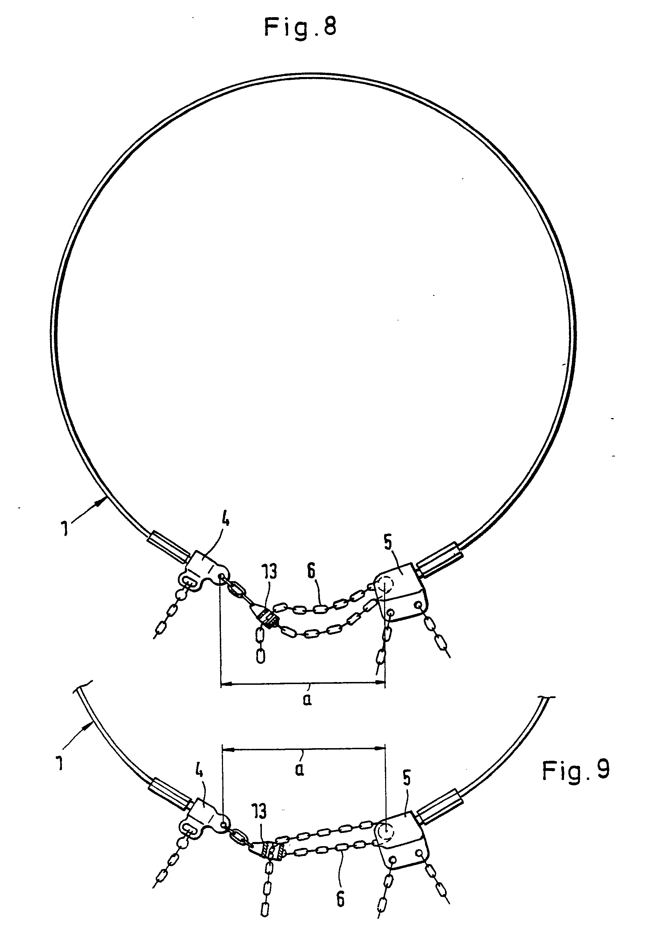

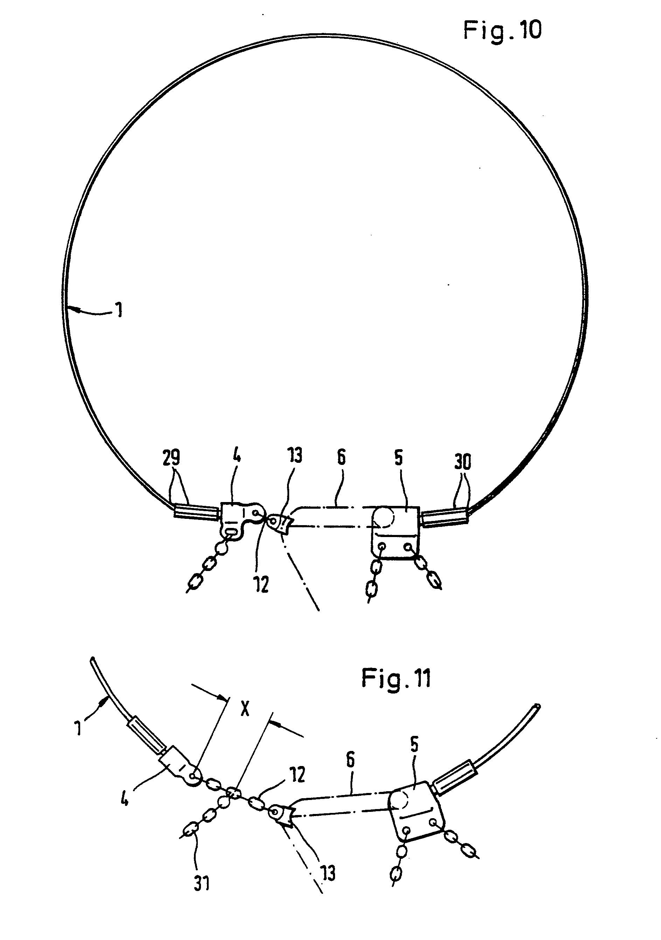

Die Fig. 8 und 9 sollen lediglich verdeutlichen, dass der Abstand zwischen den Endteilen 4 und 5 der inneren Halterung 1 sowohl im gespannten Zustand als auch im ungespannten Zustand des Spannstranges 6 im wesentlichen gleich bleibt, was in den Figuren durch den Wert a angedeutet ist. Im übrigen erkennt man gut, dass die Umlenkung 13 die Funktion eines Abstandshalters für die nebeneinander verlaufenden Abschnitte des Spannstranges 6 bildet.

In Fig. 10 ist eine Spannstelle dargestellt, bei der eine innere Halterung 1 Verwendung findet, die in der Nähe ihrer Endteile 4 und 5 zur Radachse gekrümmte bzw. abgewinkelte Abschnitte 29 und 30 aufweist.

Bei den bisherigen Konstruktionen greifen Kettenstrangabschnitte des Laufnetzes an die Enden der inneren Halterung an. Fig. 11 zeigt hingegen eine Lösung, bei der ein Kettenstrangabschnitt 31 zwischen dem Endteil 4 und dem Endteil 5 an ein von einem Kettenstrangabschnitt gebildetes Verbindungselement 12 angreift, d. h. im Abstand X vom Endteil 4.

Bei der bisher dargestellten Konstruktionen wird die dem Endteil 4 der inneren Halterung 1 zugeordnete Umlenkung 13 stets von einer Gleithülse gebildet, die in ihrem Aufbau weitgehend der Gleithülse 7 im Bereich des Laufnetzes entspricht. Die Verwendung einer derartigen Gleithülse hat den Vorteil, dass man eine sehr flach bauende Umlenkung erhält. Die flache Bauweise wird insbesondere dadurch erzielt, dass die Gleithülse einen im wesentlichen kreuzförmigen Führungskanal aufweist, dessen Achsen unter einem Winkel von etwa 45° zur Reifenfläche angeordnet sind. Statt einer Gleithülse lässt sich jedoch auch für die den Spannstrang zur Lauffläche führende Umlenkung ein Ring oder eine Rolle verwenden.

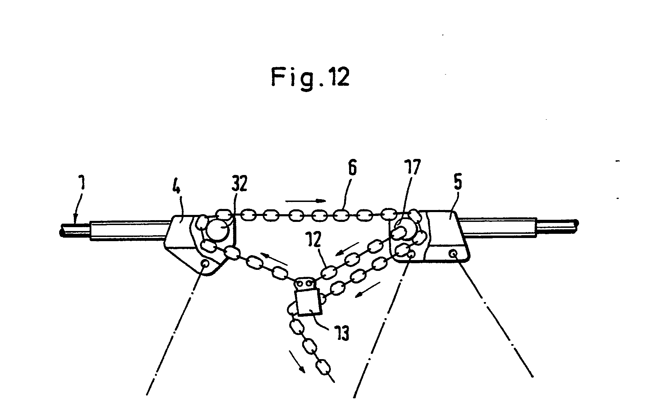

Fig. 12 zeigt eine Spannstelle, bei der der Spannstrang 6 nicht wie bei den bisher erörterten Konstruktionen zweimal sondern dreimal umgelenkt wird. Zu diesem Zweck ist nicht nur das Endteil 5 mit einer Rolle bzw. einem Zapfen 17 versehen, sondern auch das Endteil 4 weist eine Rolle oder einen Zapfen 32 auf.

**Patentansprüche**

1. Gleitschutzkette für Fahrzeugreifen mit je einer bei montierter Kette (2) gegen die Innenseite und die Aussenseite des Reifens zur Anlage kommenden Halterung (1, 3) für sich über die Lauffläche erstreckende Kettenstrangabschnitte, bei der zum Spannen der über den Reifen stülpbaren von einem federnden Stahlbügel gebildeten, eine gewisse Eigensteifigkeit aufweisenden inneren Halterung (1) ein im Bereich der inneren Halterung einen Flaschenzug bildender Spannstrang (6) dient, der im Zwischenraum zwischen den Endteilen (4, 5) der inneren Halterung angeordnet ist und dessen freies Ende über die Lauffläche des Reifens zur äusseren Halterung (3) geführt ist, dadurch gekennzeichnet, dass die den Spannstrang (6) aus dem Bereich der inneren Halterung (1) zur Lauffläche führende letzte Umlenkung (13) des Flaschenzuges durch gegenüber der inneren Halterung (1) bewegliche Verbindungselemente (6, 12) im Abstand von Endteilen (4, 5) der inneren Halterung (1) gehalten wird, dass mindestens ein erstes bewegliches Verbindungselement (12) ausgehend von dem ersten Endteil (4) der inneren Halterung (1) an der letzten Umlenkung (13) des Flaschenzuges befestigt ist und dass zweite bewegliche Verbindungselemente nur durch Stränge (6) des Flaschenzuges gebildet werden, wobei eine weitere Umlenkung (17) des Flaschenzuges am zweiten Endteil (5) der inneren Halterung befestigt ist.

2. Gleitschutzkette nach Anspruch 1, dadurch gekennzeichnet, dass die Endteile (4, 5) um 360° drehbar an den Enden der inneren Halterung (1) gelagert sind.

3. Gleitschutzkette nach Anspruch 1 oder 2, dadurch gekennzeichnet, dass die Verbindungselemente (6, 12) Kettenglieder bzw. Kettenstrangabschnitte sind.

4. Gleitschutzkette nach Anspruch 3, dadurch gekennzeichnet, dass mindestens ein die Umlenkung (13) im Abstand von einem Endteil haltendes Verbindungselement von einem Teil des Spannstranges (6) gebildet wird.

5. Gleitschutzkette nach einem der Ansprüche 1 bis 4, dadurch gekennzeichnet, dass die innere Halterung (1) mit Anschlusspunkte für die sich über die Lauffläche erstreckenden Kettenstrangstücke definierenden Abstandshaltern (20) aus Kunststoff versehen ist.

6. Gleitschutzkette nach Anspruch 4 oder 5, dadurch gekennzeichnet, dass der Stahlbügel im Bereich seiner Enden zum Bügelzentrum gekrümmt bzw. abgewinkelt ist (Fig. 10).

7. Gleitschutzkette nach einem der Ansprüche 1 bis 6, dadurch gekennzeichnet, dass die den Spannstrang (6) aus dem Bereich der inneren Halterung (1) zur Lauffläche führende Umlenkung (13) über mindestens ein Verbindungselement (12) mit einem Endteil (4) der inneren Halterung (1) verbunden ist und das dem freien Ende des Spannstranges (6) abgewandte Spannstrangende (16) an der Umlenkung (13) befestigt ist.

8. Gleitschutzkette nach Anspruch 7, dadurch gekennzeichnet, dass die Umlenkung (13) von einer mit zwei Anschlussösen (14, 15) für Kettenglieder versehenen Gleithülse gebildet wird.

9. Gleitschutzkette nach einem der Ansprüche 1 bis 6, dadurch gekennzeichnet, dass die den Spannstrang (6) aus dem Bereich der inneren Halterung (1) zur Lauffläche führende Umlenkung (13) mit einem Endteil (4) der inneren Halterung (1) über Verbindungselemente (12, 28) verbunden ist, die eine Verlängerung des dem freien Ende des Spannstranges (6) abgewandten Spannstrangendes (16) bilden (Fig. 7).

10. Gleitschutzkette nach einem der Ansprüche 1 bis 9, dadurch gekennzeichnet, dass der Spannstrang (6) vor dem Passieren der ihn zur Lauffläche führenden an das eine Endteil (4) der inneren Halterung (1) über mindestens ein Verbindungselement (12) angeschlossenen Umlenkung (13) durch eine weitere am anderen Endteil (5) der inneren Halterung (1) befestigte Umlenkung (17) geführt ist.

11. Gleitschutzkette nach Anspruch 10, dadurch gekennzeichnet, dass beide Endteile (4, 5) mit zusätzlichen Umlenkungen (17, 32) für den Spannstrang (6) versehen sind.

12. Gleitschutzkette nach Anspruch 10 oder 11, dadurch gekennzeichnet, dass die weiteren Umlenkungen (17, 32) in jeweils einem Gehäuse angeordnet sind, das von den Endteilen (4, 5) gebildet wird.

13. Gleitschutzkette nach einem der Ansprüche 10 bis 12, dadurch gekennzeichnet, dass die weiteren Umlenkungen (17, 32) von jeweils einer Rolle gebildet werden.

14. Gleitschutzkette nach einem der Ansprüche 1 bis 13, dadurch gekennzeichnet, dass die Endteile (4, 5) der inneren Halterung (1) drehbar auf Zapfen (18, 19) gelagert sind, die Halterungen für Anschlußelemente von sich über die Lauffläche erstreckenden Kettenstrangabschnitten bilden.

15. Gleitschutzkette nach einem der Ansprüche 1 bis 14, dadurch gekennzeichnet, dass die äussere Halterung (3) endlos ausgebildet und über die Kettenstrangabschnitte des Laufnetzes (2) durch die innere Halterung (1) in eine Spannstellung überführbar ist.

16. Gleitschutzkette nach einem der Ansprüche 1 bis 15, dadurch gekennzeichnet, dass das Kettennetz (2) über Hakenglieder (21) mit der inneren Halterung (1) verbunden ist.

17. Gleitschutzkette nach einem der Ansprüche 1 bis 16, dadurch gekennzeichnet, dass die den Spannstrang (6) zur Lauffläche führende Umlenkung (13) von einer Gleithülse gebildet wird, deren Länge L grösser ist als die Differenz aus der Teilung t und dem Glieddrahtdurchmesser d der Glieder einer den Spannstrang (6) bildenden Spannkette.

18. Gleitschutzkette nach einem der Ansprüche 1 bis 17, dadurch gekennzeichnet, dass die den Spannstrang (6) zur Lauffläche führende Umlenkung (13) einen Abstandshalter für nebeneinander verlaufende Abschnitte des Spannstranges (6) bildet.

19. Gleitschutzkette nach einem der Ansprüche 5 bis 18, dadurch gekennzeichnet, dass der die innere Halterung (1) bildende federnde Stahlbügel in seiner Ausgangslage einen Krümmungsradius hat, der 70-85 % des halben Reifendurchmessers beträgt.

20. Gleitschutzkette nach einem der Ansprüche 5 bis 19, dadurch gekennzeichnet, dass der Abstand zwischen den Endteilen (4, 5) des Stahlbügels etwa 10-25 % der Länge des Stahlbügels beträgt.

21. Gleitschutzkette nach einem der Ansprüche 1 bis 20, dadurch gekennzeichnet, dass der Spannstrang (6) an der äusseren Halterung (3) arretierbar ist.

22. Gleitschutzkette nach einem der Ansprüche 1 bis 21, dadurch gekennzeichnet, dass an der äusseren Halterung (3) ein eine Durchziehöffnung aufweisendes Sperrelement (9) für den Spannstrang (6) angeordnet ist.

23. Gleitschutzkette nach Anspruch 22, dadurch gekennzeichnet, dass zwischen einem am Ende des Spannstranges (6) angeordneten Verwahrungshaken (10) und dem Sperrelement (9) für den Spannstrang (6) ein elastisches Zwischenstück (11) angeordnet ist.

24. Verfahren zur Herstellung einer Gleitschutzkette nach einem der Ansprüche 1 bis 23, dadurch gekennzeichnet, dass an die aus elastischem Federstahldraht bestehende innere Halterung (1) Endteile (4, 5) angebracht werden, nachdem die Enden der inneren Halterung (1) zuvor wellenförmig deformiert worden sind.

**Claims**

1. Anti-skid tyre chain for vehicle tyres, having in each case a mounting (1, 3) which comes into contact against the inner side and the outer side of the tyre when the chain (2) is assembled and which is for chain-strand portions which extend over the tread, and in which a tensioning strand (6) which forms a tackle block in the area of the inner mounting, is used for tensioning the inner mounting (1) which can be put over the tyre and which is formed by a flexible steel hoop having a certain inherent rigidity, which tensioning strand (6) is arranged in the intermediate space between the end parts (4, 5) of the inner mounting and its free end is guided over the tread of the tyre to the outer mounting (3), characterized in that the last deflection piece (13) of the tackle block, which deflection piece (13) guides the tensioning strand (6) out of the area of the inner mounting (1) towards the tread, is held at a distance from the end parts (4, 5) of the inner mounting (1) by connecting elements (6, 12) which are movable relative to the inner mounting (1), that at least a first movable connecting element (12), starting from the first end part (4) of the inner mounting (1), is fixed to the last deflection piece (13) of the tackle bock, and that second movable connecting elements are formed only by strands (6) of the tackle block, with a further deflection piece (17) of the tackle block being fixed to the second end part (5) of the inner mounting.

2. Anti-skid tyre chain according to Claim 1, characterized in that the end parts (4, 5) are rotatably mounted through 360° on the ends of the inner mounting (1).

3. Anti-skid tyre chain according to Claim 1 or 2, characterized in that the connecting elements (6, 12) are chain-linked or chain-strand portions.

4. Anti-skid tyre chain according to Claim 3, characterized in that at least one connecting element holding the deflection piece (13) at a distance from an end part is formed by a part of the tensioning strand (6).

5. Anti-skid tyre chain according to one of Claims 1 to 4, characterized in that the inner mounting (1) is provided with plastic distance pieces (20) defining attachment points for the chain-strand pieces extending over the tread.

6. Anti-skid tyre chain according to Claim 4 or 5, characterized in that the steel hoop, in the area of its ends, is bent or angled towards the hoop centre (Fig. 10).

7. Anti-skid tyre chain according to one of Claims 1 to 6, characterized in that the deflection piece (13) guiding the tensioning strand (6) out of the area of the inner mounting (1) towards the tread is connected to an end part (4) of the inner mounting (1) *via* at least one connecting element (12), and the tensioning strand end (16) remote from the free end of the tensioning strand (6) is fixed to the deflection piece (13).

8. Anti-skid tyre chain according to Claim 7, characterized in that the deflection piece (13) is formed by a sliding sleeve provided with two attachment eyelets (14, 15) for chain links.

9. Anti-skid tyre chain according to one of Claims 1 to 6, characterized in that the deflection piece (13) guiding the tensioning strand (6) out of the area of the inner mounting (1) towards the tread is connected to an end part (4) of the inner mounting (1) *via* connecting elements (12, 28) which constitute an extension of the tensioning strand end (16) remote from the free end of the tensioning strand (6) (Fig. 7).

10. Anti-skid tyre chain according to one of Claims 1 to 9, characterized in that the tensioning strand (6) before passing the deflection piece (13) guiding it towards the tread and attached to one end part (4) of the inner mounting (1) *via* at least one connecting element (12), is guided by a further deflection piece (17) fixed to the other end part (5) of the inner mounting (1).

11. Anti-skid tyre chain according to Claim 10, characterized in that both end parts (4, 5) are provided with additional deflection pieces (17, 32) for the tensioning strand (6).

12. Anti-skid tyre chain according to Claim 10 or 11, characterized in that the further deflection pieces (17, 32) are arranged in one housing each which is formed by the end parts (4, 5).

13. Anti-skid tyre chain according to one of Claims 10 to 12, characterized in that the further deflection pieces (17, 32) are formed by one roller each.

14. Anti-skid tyre chain according to one of Claims 1 to 13, characterized in that the end parts (4, 5) of the inner mounting (1) are rotatably mounted on pins (18, 19) which form mountings for attachment elements of chain-strand portions extending over the tread.

15. Anti-skid tyre chain according to one of Claims 1 to 14, characterized in that the outer mounting (3) is made endless and can be transferred into a tensioning position by the inner mounting (1) *via* the chain-strand portions of the running nets (2).

16. Anti-skid tyre chain according to one of Claims 1 to 15, characterized in that the chain net (2) is connected to the inner mounting (1) *via* hook members (21).

17. Anti-skid tyre chain according to one of Claims 1 to 16, characterized in that the deflection piece (13) guiding the tensioning strand (6) towards the tread is formed by a sliding sleeve, the length L of which is greater than the difference between the pitch t and the wire diameter d of the length of a tensioning chain forming the tensioning strand (6).

18. Anti-skid tyre chain according to one of Claims 1 to 17, characterized in that the deflection piece (13) guiding the tensioning strand (6) towards the tread forms a distance piece for portions of the tensioning strand (6), running next to one another.

19. Anti-skid tyre chain according to one of Claims 5 to 18, characterized in that the flexible steel hoop forming the inner mounting (1), in its initial position, has a radius of curvature which is 70 to 85 % of the tyre radius.

20. Anti-skid tyre chain according to one of Claims 5 to 19, characterized in that the distance between the end parts (4, 5) of the steel hoop is about 10 to 25 % of the length of the steel hoop.

21. Anti-skid tyre chain according to one of Claims 1 to 20, characterized in that the tensioning strand (6) can be locked on the outer mounting (3).

22. Anti-skid tyre chain according to one of Claims 1 to 21, characterized in that a blocking element (9) for the tensioning strand (6), which blocking element (9) has a pull-through opening, is arranged on the outer mounting (3).

23. Anti-skid tyre chain according to Claim 22, characterized in that an elastic intermediate piece (11) is arranged between a retaining hook (10), arranged on the end of the tensioning strand (6), and the blocking element (9) for the tensioning strand (6).

24. A method of making an anti-skid tyre chain according to one of Claims 1 to 23, characterized in that end parts (4, 5) are attached to the inner mounting (1), made of elastic spring-steel wire, after the ends of the inner mounting (1) have first been deformed in wave shapes.

## Revendications

1. Chaîne antidérapante pour pneumatique de véhicule comprenant des montures (1, 3) qui viennent s'appuyer respectivement contre le flanc intérieur et contre le flanc extérieur d'un pneumatique lorsque la chaîne (2) est montée et qui servent pour des segments de brins de chaîne s'étendant par-dessus la bande de roulement, dans laquelle, pour tendre la monture intérieure (1), qui peut être enfilée par-dessus le pneumatique et est formée par un arceau d'acier élastique et présente une certaine rigidité propre, on utilise un brin de tension (6) qui forme un mouflage dans la région de la monture intérieure, qui est disposé dans l'espace intercalaire entre les pièces d'extrémités (4, 5) de la monture intérieure et dont l'extrémité libre passe par-dessus la bande de roulement du pneumatique pour atteindre la monture extérieure (3), caractérisée en ce que le dernier renvoi du mouflage qui renvoie le brin de tension (6) de la région de la monture intérieure (1) vers la bande de roulement, est maintenu à distance des pièces d'extrémités (4, 5) de la monture intérieure (1) par des éléments de liaison (6, 12) qui sont mobiles par rapport à la monture intérieure (1), en ce qu'au moins un premier élément de liaison mobile (12) qui part de la première pièce d'extrémité (4) de la monture intérieure (1) est fixé au dernier renvoi (13) du mouflage et en ce que des deuxièmes éléments de liaison mobiles sont formés uniquement par des brins (6) du mouflage, un autre renvoi (17) du mouflage étant fixé à la deuxième pièce d'extrémité (5) de la monture intérieure.

2. Chaîne antidérapante selon la revendication 1, caractérisée en ce que les pièces d'extrémités (4, 5) sont montées sur les extrémités de la monture intérieure (1) de manière à pouvoir tourner sur un tour complet.

3. Chaîne antidérapante selon la revendication 1 ou la revendication 2, caractérisée en ce que les éléments de liaison (6, 12) sont des maillons de chaîne ou des segments de brins de chaîne.

4. Chaîne antidérapante selon la revendication 3, caractérisée en ce qu'au moins un élément de liaison qui maintient le renvoi (13) à une certaine distance d'une pièce d'extrémité est formé par une partie du brin de tension (6).

5. Chaîne antidérapante selon l'une des revendications 1 à 4, caractérisée en ce que la monture intérieure (1) est munie d'éléments d'espacement (20) en matière plastique qui fixent la position des points de raccordement des morceaux de brins de chaîne qui s'étendent sur la bande de roulement.

6. Chaîne antidérapante selon la revendication 4 ou la revendication 5, caractérisée en ce que l'arceau d'acier est recourbé ou coudé vers son centre à proximité de ses extrémités.

7. Chaîne antidérapante selon l'une des revendications 1 à 6, caractérisée en ce que le renvoi (13) qui renvoie le brin de tension (6) de la région de la monture intérieure (1) de la bande de roulement est relié par au moins un élément de liaison (12) à une pièce d'extrémité (4) de la monture intérieure (1) et en ce que l'extrémité (16) du brin de tension qui est à l'opposé de l'extrémité libre du brin de tension (6) est fixée au renvoi (13).

8. Chaîne antidérapante selon la revendication 7, caractérisée en ce que le renvoi (13) est formé d'une douille coulissante munie de deux œillets de raccordement (14, 15) destinés à recevoir des maillons de la chaîne.

9. Chaîne antidérapante selon l'une des revendications 1 à 6, caractérisée en ce que le renvoi (13) qui renvoie le brin de tension (6) vers la bande de roulement en partant de la région de la monture intérieure (1) est relié à une pièce d'extrémité (4) de la monture intérieure (1) par l'intermédiaire d'éléments de liaison (12, 28) qui forment un prolongement de l'extrémité (16) du brin de tension qui est à l'opposé de l'extrémité libre du brin de tension (6) (Fig. 7).

10. Chaîne antidérapante selon l'une des revendications 1 à 9, caractérisée en ce que, avant de franchir le renvoi (13) qui renvoie ce brin vers la bande de roulement, et qui est raccordé à une pièce d'extrémité (4) de la monture intérieure (1) par l'intermédiaire d'au moins un élément de liaison (12), le brin de tension (6) passe à travers un autre renvoi (17) fixé à l'autre pièce d'extrémité (5) de la monture intérieure (1).

11. Chaîne antidérapante selon la revendication 10, caractérisée en ce que les deux pièces d'extrémités (4, 5) sont munies de renvois supplémentaires (17, 32) pour le brin de tension (6).

12. Chaîne antidérapante selon la revendication 10 ou la revendication 11, caractérisée en ce que les autres renvois (17, 32) sont disposés chacun dans un boîtier qui est formé par l'une des pièces d'extrémités (4, 5).

13. Chaîne antidérapante selon l'une des revendications 10 à 12, caractérisée en ce que les autres renvois (17, 32) sont formés chacun par un galet.

14. Chaîne antidérapante selon l'une des revendications 1 à 13, caractérisée en ce que les pièces d'extrémités (4, 5) de la monture intérieure (1) sont montées tournantes sur des axes (18, 19) qui forment les montures des éléments de raccordement de segments de brins de chaîne qui passent sur la bande de roulement.

15. Chaîne antidérapante selon l'une des revendications 1 à 14, caractérisée en ce que la monture extérieure (3) est réalisée sans fin et peut être mise dans une position de tension par la monture intérieure (1), par l'intermédiaire des segments de brins de chaîne du filet (2) de la bande du roulement.

16. Chaîne antidérapante selon l'une des revendications 1 à 15, caractérisée en ce que le filet de chaîne (2) est relié à la monture intérieure (1) par des maillons à crochet (21).

17. Chaîne antidérapante selon l'une des revendications 1 à 16, caractérisée en ce que le renvoi (13) qui renvoie le brin de tension (6) vers la bande de roulement est formé par une douille coulissante dont la longueur (L) est plus grande que la différence entre le pas (t) et le diamètre (d) du fil des maillons d'une chaîne de tension qui forme le brin de tension (6).

18. Chaîne antidérapante selon l'une des revendications 1 à 17, caractérisée en ce que le renvoi (13) qui renvoie le brin de tension (6) vers la bande de roulement forme un élément d'espacement pour les segments du brin de tension qui sont contigus.

19. Chaîne antidérapante selon l'une des revendications 5 à 18, caractérisée en ce que l'arceau d'acier élastique formant la monture intérieure (1) possède dans sa position initiale un rayon de courbure qui représente 70 à 85 % du rayon du pneumatique.

20. Chaîne antidérapante selon l'une des revendications 5 à 19, caractérisée en ce que la distance entre les pièces d'extrémités (4, 5) de l'arceau d'acier représente environ 10 à 25 % de la longueur de l'arceau d'acier.

21. Chaîne antidérapante selon l'une des revendications 1 à 20, caractérisée en ce que le brin de tension (6) peut être bloqué sur la monture extérieure (3).

22. Chaîne antidérapante selon l'une des revendications 1 à 21, caractérisée en ce que, sur la monture extérieure (3), est monté un élément de blocage (9) destiné à bloquer le brin de tension (6) et qui présente une ouverture de tirage.

23. Chaîne antidérapante selon la revendication 22, caractérisée en ce qu'un élément intercalaire élastique (11) est interposé entre un crochet de sécurité (10) disposé à l'extrémité du brin de tension (6).

24. Procédé de fabrication d'une chaîne antidérapante selon les revendications 1 à 23, caractérisé en ce qu'on monte des pièces d'extrémités (4, 5) sur une monture (1) constituée par un fil d'acier à ressort élastique, après quoi on déforme les extrémités de la monture intérieure (1) pour leur donner une forme ondulée.

# Fig.1

0 060 804

# Fig. 2

# Fig. 3

Fig. 4

Fig. 6

Fig. 5.

Fig. 7

# Fig.8

# Fig.9

4

Fig. 10

29  4  13  6  5  30

12

Fig. 11

X

7

4

12

6

5

31

13

# Fig.12